# DEMANDE DE BREVET EUROPEEN

(11) **EP 2 538 727 A1**
(43) Date de publication de la demande: **26.12.2012**
(21) Numéro de dépôt: 11305782.2
(22) Date de dépôt: 21.06.2011
(51) Int. Cl.: H04W 48/02

(54) **Procédé de gestion de terminaux en situation d'itinérance dans un réseau de télécommunications cellulaire**

(71) Demandeur: Gemalto SA, 92190 Meudon (FR)
(72) Inventeur: Tuilier, Edmond, 13012 MARSEILLE (FR); Kuc, Jean-François, 13112 LA DESTROUSSE (FR)

(57) **Abrégé**

L'invention concerne un procédé de gestion de terminaux en situation d'itinérance dans un réseau de télécommunications cellulaire géré par un opérateur. Selon l'invention, le procédé consiste à :
- détecter dans le réseau qu'un desdits terminaux est d'un type avec lequel l'opérateur ne souhaite pas établir de communication ;
- rejeter toute demande de connexion du terminal au réseau.

## Description

Le domaine de l'invention est celui des télécommunications dans des réseaux cellulaires et concerne plus précisément un procédé de gestion de terminaux en situation d'itinérance dans un réseau de télécommunications cellulaire géré par un opérateur.

L'invention s'applique particulièrement aux communications entre machines (M2M) dans le cas où un abonné à un réseau de télécommunications entre en situation d'itinérance (« roaming » en anglais).

Typiquement, un abonné peut disposer d'un nombre important de dispositifs communicants : un téléphone mobile, une tablette numérique, un PDA, un véhicule,... chacun de ces dispositifs communicants comprenant un élément de sécurité tel qu'un UICC ou une carte SIM. L'UICC ou la carte SIM peut être solidaire ou non de l'appareil dans lequel il est embarqué, c'est-à-dire extractible ou non.

Dans le cadre du M2M, un UICC ou une carte SIM est appelée eUICC (Embedded UICC) ou MIM (Machine Identifier Module).

Dans le cas d'un téléphone portable, l'UICC permet classiquement à l'abonné de téléphoner. A l'aide d'une tablette numérique, l'abonné peut se connecter à Internet. Le PDA lui permet de consulter son agenda électronique. Une liaison établie entre son véhicule et le réseau de télécommunications permet par exemple de signaler une panne à son concessionnaire automobile.

Dans son réseau hôte, appelé Home Network (HN), l'abonné bénéficie de tous les services pour lesquels il a souscrit un abonnement auprès de son opérateur. L'abonné entre en situation d'itinérance, que ce soit dans son pays d'origine ou à l'étranger, lorsque ses dispositifs communicants ne sont plus connectés avec son HN mais avec le réseau d'un autre opérateur, appelé Visited Network (VN). Cet opérateur visité VN est le plus souvent un opérateur étranger dont le réseau couvre tout ou partie d'un territoire étranger dans lequel l'abonné se rend par exemple pour y passer des vacances. Il peut également s'agir d'un opérateur du même pays que le HN, dans le cas où des opérateurs nationaux ont signé des accords de roaming.

Dans le cadre de communications mobiles, les opérateurs passent des accords entre eux afin que leurs abonnés itinérants puissent continuer à utiliser leurs téléphones portables en situation d'itinérance. Par exemple, un abonné allemand à l'opérateur T-Mobil peut utiliser son téléphone portable en France en passant par l'opérateur français Orange car T-Mobil et Orange ont signé des accords dans ce sens, généralement réciproques. Lors de son arrivée en France, lorsque l'abonné n'est plus couvert par le réseau HN T-Mobil, l'UICC ou la carte SIM comprise dans le téléphone portable consulte un fichier intégré comprenant la liste des réseaux étrangers préférés, appelé PLMN (Preferred Land Mobile Network). Si le réseau Orange figure en haut de cette liste, le téléphone portable va tenter de se connecter à ce réseau. Si la connexion échoue, le téléphone mobile va tenter de se connecter au second réseau français préféré, par exemple le réseau SFR. En cas de connexion réussie, le téléphone reste connecté à ce réseau aussi longtemps qu'une couverture radioélectrique est disponible.

Le problème posé par les dispositifs communicants itinérants est qu'ils génèrent beaucoup de signalisation au niveau du réseau visité VN : une fois connecté à un réseau visité, à chaque changement de cellule couverte par une station de base (BTS), un handover est réalisé entre l'ancienne et la nouvelle cellule. Lorsqu'il y a un changement de contrôleur de station de base (BSC), une communication est établie entre l'ancienne et la nouvelle BSC. Lorsqu'il y a un changement de VLR (Visited Local Register), une communication est établie entre le VLR et le HLR (Home Local Register) du pays d'origine et une facturation est établie par exemple par des opérateurs de fibres optiques reliant le pays visité et le pays d'origine (les HLR d'un opérateur sont reliés aux VLR des autres opérateurs par exemple par des réseaux de fibres optiques). Les communications facturées sont, pour le VN, celles correspondant au transport des données depuis de VLR jusqu'à la frontière du HN (dans le sens montant du VLR jusqu'à la frontière du HN et dans le sens descendant depuis la frontière du HN jusqu'au VLR) et, pour le HN, celles correspondant au transport des données depuis le HLR jusqu'à la frontière du VN (dans le sens montant de la frontière du VN et dans le sens descendant du HLR jusqu'à la frontière du VN).

Toutes ces signalisations entraînent un surcoût pour l'opérateur du VN et une augmentation du trafic sur son réseau, sans que nécessairement l'abonné n'utilise son UICC pour passer des communications vocales ou envoyer ou recevoir des données, ce qui aurait assuré un gain financier à l'opérateur du VN. Ceci est particulièrement vrai dans le domaine du M2M où par exemple un véhicule d'un touriste étranger équipé d'un eUICC ou MIM peut être amené à traverser plusieurs centaines de cellules pendant ses vacances dans un pays couvert par un opérateur d'un VN, par exemple celui avec lequel l'opérateur du HN a signé un accord de roaming préférentiel (celui auquel le véhicule va tenter de se connecter prioritairement). Ce problème se pose de manière générale pour tout appareil (telle qu'une machine) équipé d'un élément de sécurité, tel qu'un eUICC par exemple, qui est amené à circuler dans une zone géographique (en situation d'itinérance) couverte par un autre opérateur, en particulier pour un véhicule automobile dont la connexion au réseau d'un VN ne justifie pas, aux yeux de l'opérateur du réseau visité VN, une connexion, ne serait-ce qu'épisodique (et donc non permanente) à son réseau. Il est par exemple d'une utilité toute relative pour un véhicule de signaler à un garagiste ou concessionnaire situé à l'étranger qu'il vient d'avoir une panne ou un accident dans le pays qu'il est en train de visiter : la panne sera réparée sur place et non pas dans son pays d'origine. Le garagiste ou concessionnaire étranger ne peut également pas intervenir en cas d'accident de la circulation. Etablir une communication avec son HN via le VN n'est dans ce cas pas d'utilité pour un véhicule.

Le problème que se propose de résoudre la présente invention est justement d'éviter à un opérateur d'un VN de supporter toute la signalisation générée par un dispositif tel qu'une machine en itinérance sur son réseau.

Pour ce faire, la présente invention propose un procédé de gestion de terminaux en situation d'itinérance dans un réseau de télécommunications cellulaire géré par un opérateur, le procédé consistant à :
- détecter dans le réseau qu'un des terminaux est d'un type avec lequel l'opérateur ne souhaite pas établir de communication ;
- rejeter toute demande de connexion du terminal au réseau.

La mise en oeuvre d'un tel procédé permet de refuser la connexion d'un terminal au réseau visité. Celui-ci tentera alors de se connecter à un réseau d'un autre opérateur.

Le terminal est de préférence de type M2M.

La détection consiste avantageusement soit à détecter l'IMEI du terminal, soit l'IMSI de l'élément de sécurité du terminal.

L'élément de sécurité est préférentiellement un eUICC.

Le procédé selon l'invention peut en outre consister à informer le HLR que le terminal dont la demande de connexion est rejetée que le terminal a quitté le réseau de l'opérateur.

D'autres caractéristiques et avantages de l'invention apparaîtront à la lecture de la description suivante d'un mode de mise en oeuvre avantageux de l'invention, donné à titre illustratif et non limitatif, et des figures annexées montrant les différentes étapes de mise en oeuvre de l'invention.

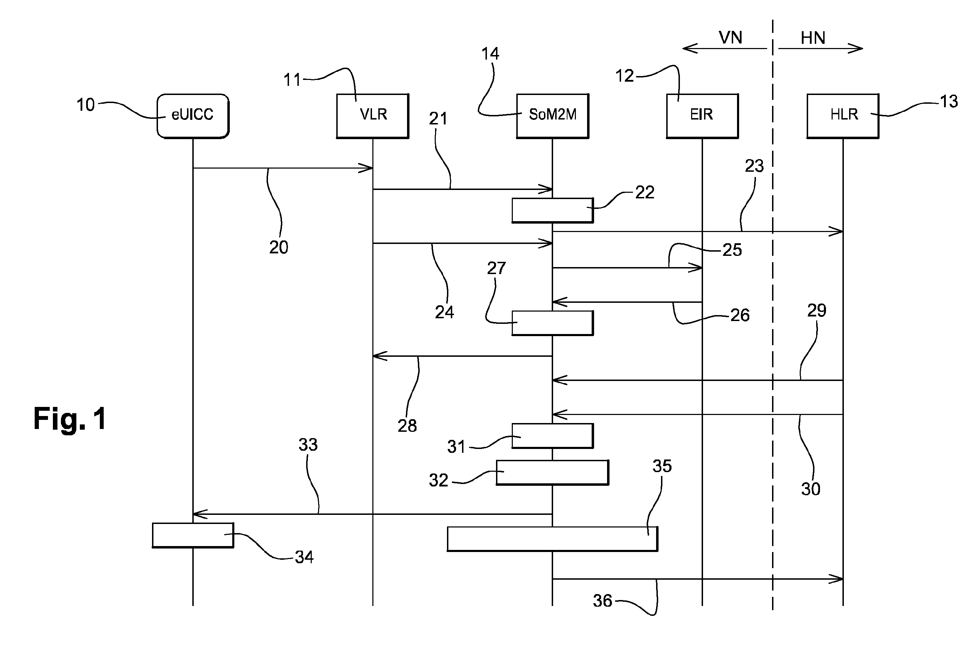

Dans la figure 1 correspondant à un mode de mise en oeuvre préférentiel de l'invention, différents éléments physiques sont représentés : un eUICC 10 compris dans une machine, tel qu'un véhicule, est en itinérance dans un réseau visité VN. Le réseau VN comprend notamment un VLR 11 et un EIR 12. Le réseau hôte HN de l'abonné comprend un HLR 13 apte à communiquer avec le VLR 11. L'invention propose d'insérer, entre le VLR 11 et le HLR 13, un élément 14 appelé SoM2M. Le rôle du SoM2M est d'intercepter les communications entre le VLR 11 et le HLR 13 afin de les modifier. Le fonctionnement de ce système est le suivant :

Lorsque la machine dans laquelle est comprise l'eUICC 10 veut se rattacher à un réseau visité VN, le fichier PLMN de l'eUICC est consulté. Ce fichier est par exemple celui connu sous la dénomination EF OPLMNwAcT (acronyme de Operator-controlled PLMN selector with access technology). Le réseau visité VN figurant en haut de ce fichier va alors être sélectionné et un message 20 de demande d'attachement au VN est transmis au VLR 11. Ce message est du type MAP Update Location Request (MAP signifiant Multiple Access Protocol) et comprend un identifiant de l'UICC, typiquement son IMSI. Le VLR 11 relaye ce message lors d'une étape 21 à destination du HLR 13. Le SoM2M 14 intercepte ce message, en extrait l'IMSI lors d'une étape 22 et relaye la demande d'attachement au HLR 13 lors d'une étape 23. En parallèle, le VLR 11 interroge l'EIR 12 pour vérifier que la machine ne figure pas sur une liste de machines volées (dans quel cas, de manière connue, la demande de rattachement sera refusée). Cette demande s'effectue lors de deux étapes 24 et 25 sous la forme de la transmission d'un message de type MAP Check IMEI (IMSI), avec IMEI étant un identifiant de la machine. L'EIR 12 répond lors d'une étape 26 par un message MAP Check IMEI Response (IMEI). Le SoM2M 14 récupère alors l'IMEI (étape 27) et relaye la réponse de l'EIR 12 au VLR 11 (étape 28).

Selon l'invention, le SoM2M, grâce à l'IMEI récupéré lors de l'étape 27, peut déterminer quel type de terminal est en train d'essayer de se connecter au réseau VN. Si le terminal est de type téléphone portable, il peut autoriser la connexion. En revanche, s'il s'agit d'une machine tel qu'un véhicule, l'opérateur du réseau VN peut avoir paramétré le SoM2M de telle sorte qu'il refuser la demande de connexion. Ceci est décrit par la suite.

Le HLR 13 répond à la demande d'attachement 23 par une réponse MAP Update Location Response (Accept) lors d'une étape 29 et fournit (étape 30) le profil de l'abonné au réseau VN. Lors de l'étape 29, la réponse du HLR 13 est généralement positive puisque les opérateurs VN et HN ont signé des accords de roaming et que l'identifiant du VN figure dans le fichier PLMN de l'eUICC 10.

Le SoM2M récupère le profil de l'abonné lors d'une étape 31 et, s'il a détecté lors de l'étape 27 que l'IMEI de la machine comprenant l'eUICC 10 correspond à une machine pour laquelle il souhaite ne pas établir de communication, il modifie, lors d'une étape 32, le message d'acceptation transmis lors de l'étape 29 en un message de refus de connexion. La discrimination du type de terminaux autorisés à se connecter au réseau VN peut également s'opérer sur la base du profil d'abonné reçu lors de l'étape 30 ou sur la base de l'IMSI reçu lors de l'étape 22. La discrimination sur la base de l'IMSI est notamment possible dès lors qu'à un type de terminal correspond un type d'IMSI. Des IMSIs d'un certain type peuvent en effet être réservés à des terminaux bien particuliers, tels que des véhicules par exemple, de telle sorte que la connaissance d'un IMSI d'un eUICC permet de connaître le type de terminal qui le contient.

La réponse à la demande de rattachement est envoyée par le SoM2M 14 à l'eUICC 10 à l'étape 33 sous la forme d'un MAP Update Location Response (reject cause RNA), ce qui signifie que l'attachement au réseau n'est pas autorisé (RNA : Roaming Not Allowed). L'eUICC 10 va alors tenter, lors d'une étape 34, de se connecter à un autre réseau VN, logiquement celui dans la liste PLMN suivant celui auquel il a tenté de se connecter pendant la procédure précitée.

Lors d'une étape 35, le SoM2M 14 élabore un message à l'attention du HLR 13 l'informant que le terminal dont la demande de connexion a quitté le réseau VN (changé de VLR dans le même réseau ou changé de réseau). Ce message lui est transmis sous la forme d'un MAP Cancel Location lors d'une étape 36 et le HLR n'a plus besoin d'être informé de la situation, jusqu'à ce que le terminal retente une connexion à un autre réseau.

L'invention permet donc de basculer des signalisations émises par un appareil indésirable d'un réseau visité à un autre. Elle s'applique de préférence aux communications entre machines et peut s'appliquer aux véhicules automobiles.

L'invention ne présente pas de risque pour les appels d'urgence car ceux-ci sont opérés sur un canal dédié, accessible même en l'absence d'élément de sécurité (eUICC).

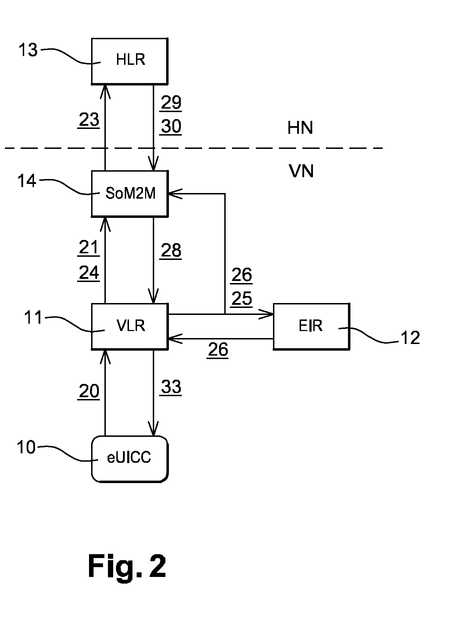

La figure 2 représente une implémentation possible du système représenté à la figure 1 avec les étapes de cette figure. Comme il est visible, le SoM2M 14 est placé dans le réseau VN, entre le VLR 11 et le HLR 13 et communique avec l'EIR 12.

L'invention s'applique également dans le cas où l'eUICC ne comprend pas de PLMN : A son initialisation, l'eUICC peut scanner les réseaux visités disponibles et les classer en fonction de leurs niveaux de puissance radio. L'eUICC tentera alors de se raccorder au réseau le plus puissant détecté. Si l'eUICC était préalablement à l'extinction de l'appareil qui le contient déjà raccordé à un réseau visité, à l'allumage de l'appareil, il tentera de raccorder à ce dernier réseau connu (dont les références sont stockées dans son fichier LOCI).

## Revendications

1. Procédé de gestion de terminaux en situation d'itinérance dans un réseau de télécommunications cellulaire géré par un opérateur, ledit procédé consistant à :
- détecter dans ledit réseau qu'un desdits terminaux est d'un type avec lequel ledit opérateur ne souhaite pas établir de communication ;
- rejeter toute demande de connexion dudit terminal audit réseau.

2. Procédé selon la revendication 1, **caractérisé en ce que** ledit terminal est de type M2M.

3. Procédé selon l'une des revendications 1 et 2, **caractérisé en ce que** ladite détection consiste à détecter l'IMEI dudit terminal.

4. Procédé selon l'une des revendications 1 et 2, **caractérisé en ce que** ladite détection consiste à détecter l'IMSI de l'élément de sécurité dudit terminal.

5. Procédé selon la revendication 4, **caractérisé en ce que** ledit élément de sécurité est un eUICC.

6. Procédé selon l'une des revendications 1 à 5, **caractérisé en ce qu'**il consiste à informer le HLR que le terminal dont la demande de connexion est rejetée que ledit terminal a quitté le réseau dudit opérateur.
